# EUROPÄISCHE PATENTSCHRIFT

(11) **EP 0 465 915 B1**
(45) Veröffentlichungstag und Bekanntmachung des Hinweises auf die Patenterteilung: **09.11.1994**
(21) Anmeldenummer: 91110434.7
(22) Anmeldetag: 25.06.1991
(51) Int. Cl.: C01B 5/00, G21C 19/317

(54) **Vorrichtung mit Schutzwirkung gegen die Absetzung von in Dampf mitgerissenen niedrig schmelzenden Fetten mit hoher Viskosität bei Entfernung und Zündung von Wasserstoff in einem Wasserstoff, Sauerstoff und Dampf enthaltenden Gasgemisch**
Device for removing hydrogen by igniting it in a hydrogen, oxygen and vapour containing gaseous mixture which device exhibits a protection against the deposition of low melting fats of high viscosity carried by the vapour
Dispositif d'élimination d'hydrogène par allumage de celui-ci dans un mélange gazeux contenant de l'hydrogène, de l'oxygène et de la vapeur, lequel dispositif est muni d'une protection contre le dépôt de graisses de bas point de fusion et de viscosité élevée entraînées par la vapeur

(30) Priorität: 11.07.1990 DE 4022132
(43) Veröffentlichungstag der Anmeldung: 15.01.1992
(73) Patentinhaber: FORSCHUNGSZENTRUM JÜLICH GMBH, 52425 Jülich (DE); Gesellschaft für Reaktorsicherheit (GRS) mbH, 50667 Köln (DE)
(72) Erfinder: Chakraborty, Amiya Kumar, Dr., W-5042 Erftstadt (DE); Rohde, Jürgen, W-5060 Bergisch-Gladbach 2 (DE); Klatt, Karl-Heinz, W-5170 Jülich (DE); Wenzl, Helmut, Prof. Dr., W-5170 Jülich (DE); Konrad, Ralf, W-6349 Sinn (DE)

(56) Entgegenhaltungen:
- EP-A- 0 303 144
- EP-A- 0 436 942
- US-A- 4 171 350
- US-A- 4 741 879

## Beschreibung

Die Erfindung betrifft eine Vorrichtung zur Vermeidung einer Absetzung von mit Dampf mitgerissenem flüssigen Fett von hoher Viskosität bei einer Verbrennung von Wasserstoff mittels katalytischem Zünder aus einem Wasserstoff, Sauerstoff und Dampf enthaltenden Gasgemisch nach dem Oberbegriff des Patentanspruchs 1.

Eine ähnliche Vorrichtung ist in der DE-A-4 003 833 (& EP-A 436 942, veröffentlicht am 17.07.91) beschrieben.

Wie in dieser Druckschrift ausführlich dargelegt, tritt das Problem, Wasserstoff aus einem Gasgemisch zu beseitigen, insbesondere bei Unfällen mit einer thermischen Kernzerstörung in Leichtwasserreaktor-Anlagen (Kernschmelzen) auf, bei denen Wasserstoff in die sauerstoffhaltige Atmosphäre des Sicherheitseinschlusses austritt und hierdurch eine Explosionsgefahr entsteht.

Der freigesetzte Wasserstoff kann je nach der lokalen Konzentration, der Turbulenz und den geometrischen Gegebenheiten innerhalb des Sicherheitsbehälters in Form einer Deflagration oder Detonation verbrennen. Deshalb ist sowohl die lokale als auch die globale Beseitigung des Wasserstoffs in einer Unfallsituation mit Kernschmelzen von vorrangigem sicherheitstechnischen Interesse.

Zur Reduzierung der lokalen Wasserstoffkonzentration im Sicherheitsbehälter wird die Anwendung von Zündern in Erwägung gezogen. Durch eine gezielte, frühe Zündung und Verbrennung soll der Wasserstoffgehalt innerhalb der Räumlichkeiten des Sicherheitsbehälters begrenzt werden.

Vorrangig werden zwei Zündertypen für den Einsatz in dem Sicherheitseinschluß bzw. Sicherheitsbehälter in Betracht gezogen:
1) Funkenzünder und
2) katalytischer H₂-Zünder.

Die Erfindung betrifft eine Vorrichtung zur Anwendung für den katalytischen H₂-Zünder. Die Funktionsweise der katalytischen Zünder ist damit gegeben, daß die Reaktionswärme durch die katalytische Oxidation die Temperatur der Zünder sehr hoch treibt und verbunden mit der Temperaturerhöhung zu einer Zündung des umgebenden Wasserstoffs führt.

Modelluntersuchungen haben gezeigt, daß die Freisetzung des Dampfes praktisch mit dem Beginn eines Kernschmelzunfalls einsetzt, während die Freisetzung des Wasserstoffs erst mit einer gewissen Verzögerung auftritt. Da der Dampf die Räume der Anlagen, in denen sich die Umwälzpumpen, Gleitlager, Elektromotoren befinden, durchströmt, reißt er gewisse Mengen Schier- und Abdichtungsfett mit sich. Es wird hierbei unterstellt, daß die gesamte Fettmenge von 2500 l während eines Kernschmelzunfalls aus einer Hauptkühlmittelpumpe freigesetzt wird. Bei Vorhandensein von großen Fettmengen, mitgetragen in dem Dampf, kann das Fett sich vor dem Beginn der katalytischen Oxidation des Wasserstoffs auf die Katalysatoroberfläche absetzen und die spätere Reaktion teilweise oder vollständig verhindern. Die Absetzungen des Fetts, besonders an den Niederungen zwischen den aufgedampften oder bestäubten Körnern des Katalysatormaterials, stellt ein großes Problem für den Beginn der katalytischen Reaktion dar.

Bei Vorhandensein großer Dampfmengen und starker Strömung verläuft die katalytische Reaktion immer langsamer. Die Reaktionsgeschwindigkeit nimmt exponentiell mit der Temperatur zu. Erst bei ausreichend hoher Temperatur an der Oberfläche der Katalysatoranordnung ergibt sich eine ausreichende Konvektionsströmung, um zu verhindern, daß sich die im Gasgemisch enthaltenden Fettpartikelchen an der Katalysatoroberfläche absetzen. Dies wird durch die bei entsprechend hoher Temperatur erreichte Dampfbildung an der Oberfläche des Katalysatorzünders unterstützt. Solange jedoch in der Anfangsphase die Temperatur der Katalysatorzünder noch nicht ausreichend hoch ist, können sich im Dampf gemischtes Fett und Aerosole an der Oberfläche absetzen und damit die effektive Katalysatoroberfläche verringern und die Temperaturerhöhung durch Katalysatorwirkung wesentlich beeinträchtigen.

Bei einem großräumigen Versuch wurde eine Untersuchung mit Pd-Ni-Cu beschichtetem Katalysator durchgeführt.

Eine Auswertung der vorliegenden Meßergebnisse des Katalysatorversuchs ergab, daß an der Katalysatoroberfläche eine große Menge weißer Ablagerungen vorhanden war. Bei diesem Versuch wurden Katalysationsplatten während der Aufheizphase 21h lang einer Sattdampf-Luft-Atmosphäre ausgesetzt. Die Analyse des angezapften Wassers aus dem niedergesetzten Dampf ergab, daß dieses Wasser 700 mg Kohlenstoff pro Liter enthielt. Da die stellenweise vorhandene weiße Ablagerung in keiner Weise allein die katalytische Reaktion blockieren kann, wurden im Labormaßstab umfangreiche Versuche mit dem fetthaltigen Dampf durchgeführt. Dabei ergab sich, daß auch der geringste Anteil von 0,05 g des Fetts pro Liter Dampf die katalytische Reaktion verhindert. Nach einer Reinigung bei Katalysatorplatten aus den bereits durchgeführten Versuchen bei einer fetthaltigen Dampfatmosphäre wiesen die Katalysatorplatten eine wieder einwandfreie Funktion auf.

Aus EP-A-303144 ist es bekannt, in den Strömungspfad des Gasgemisches vor den Katalysator einen Keramikkörper oder Drahtwolle oder Asbestgewebe mit geringem Strömungswiderstand einzusetzen, der zur chemischen Neutralisation von Katalysatorgiften dient.

Aufgabe der Erfindung ist es, den Katalysator bis zu seiner Wirksamkeit zur Oxidation von Wasserstoff vor einem Niederschlag von Fetten zu schützen.

Ausgehend von einer Vorrichtung der eingangs genannten Art besteht die Schutzvorrichtung zur Lösung der vorgenannten Aufgabe gemäß der Erfindung aus gasdurchlässigem, für Fetteilchen im wesentlichen undurchlässigen und bei Verbrennung in leichte Asche umwandelbaren dünnen Filtermaterial. Um das Niedersetzen von Fett aus dem fetthaltigen Dampfgemisch auf die Katalysatoroberfläche zu verhindern, wurden im Labormaßstab Katalysationsversuche in fetthaltiger Dampfatmosphäre mit einer Umhüllung der zu erprobenden Katalysatoren mit dem sogenannten HEPA-Filter (High Efficiency Particulate Air) durchgeführt. Auch die Versuche mit direkt anliegendem HEPA-Filter auf der Oberfläche solcher Blech-Katalysatoren zeigten keinerlei Einfluß auf den Verlauf der Katalysationswirkung. Da die verwendeten Fette unterhalb von 160°C in gasförmiges Gemisch übergehen, wiesen die Versuche mit fetthaltiger Dampfatmosphöre oberhalb dieser Temperatur auch ohne den Einsatz des Filters nur geringfügigen Einfluß auf.

Diese Filter zeichnen sich durch einen besonders großen Abscheidegrad für Aerosole und Fett aus und besitzen gleichzeitig eine große Durchlässigkeit für Luft, Dampf und Wasserstoff. Zusätzlich wiesen diese Filter auch solche Eigenschaften wie die Temperaturbeständigkeit bis auf 560°C und Nichtbrennbarkeit aus.

Ein Absetzen von fetthaltigen Dampfemulsionen an der Oberfläche der katalytischen Zünder wird weitgehend verhindert und damit die zur Erzielung einer hohen Reaktionsgeschwindigkeit erforderliche Zündtemperatur rasch innerhalb der Vorrichtung erreicht. Nach Erreichen ausreichend hoher Temperaturen an der Oberfläche der Katalysatorzünder ergibt sich eine ausreichende Konvektionsströmung, um zu verhindern, daß sich die im Gasgemisch enthaltenen Fettpartikelchen an der Oberfläche der katalytischen Zünder absetzen. Zusätzlich durch die vorhandene hohe Temperatur der Zünder werden die mitgerissenen Fettpartikelchen in flüssiger Form in Dampfzustand übergehen und die katalytischen Reaktionen nicht mehr beeinträchtigen.

Eine vorteilhafte Weiterbildung der Erfindung ist in Patentanspruch 2 gekennzeichnet.

Die gemäß dieser Lösung vorgesehene Schutzvorrichtung mit Filterumhüllung des katalytischen Zünders bremst in einer Anfangsphase der katalytischen Reaktion den freien Zutritt von Fetteilchen an die Oberfläche der Katalysatoranordnung. Ist auf diese Weise in relativ kurzer Zeit eine ausreichende Temperatur für die Zündung erreicht, verbrennt die Filterumhüllung mit der Zündung und wird mit der Druckwelle als Asche fortgetragen. Für die nachfolgende Zündung ist durch die katalytische Erwärmung die Problematik eines Fettabsatzes nicht mehr gegeben, da
1) der Katalysator eine ausreichend hohe Temperatur für die selbsttragende Katalysatorreaktion erreicht hat,
2) durch die Bildung von Dampf an der Oberfläche der katalytischen Zünder und die damit verbundene Konvektionsströmung eine Absetzung schwierig gemacht wird,
3) die ausreichend hohe Temperatur das mitgetragene Fett in flüssiger Form zu Dampf umwandeln wird.

Spezielle Ausführungsbeispiele der Erfindung werden nachfolgend anhand der Bilder und Reaktionsverläufe näher erläutert. Es zeigen:

### Ausführungsbeispiel 1

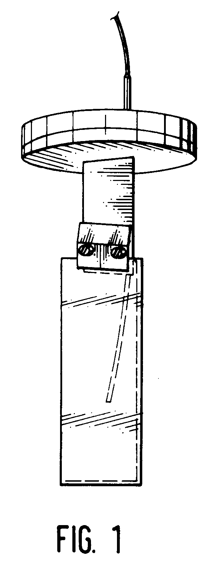

Figur 1 gibt ein Katalysatorblech mit dem direkt anliegenden Filter wieder. Hierbei wurde das Thermoelement nicht in unmittelbarer Berührung des Blechs angebracht, sondern auf den Filter gesetzt. Um die Niedersetzung des Fetts aus dem fetthaltigen Dampfgemisch auf der Katalysatoroberfläche zu verhindern, wurde der Katalysator mit dem anliegenden HEPA-Filter (High Efficiency Particulate Air) verschlossen. Diese Filter aus Glasfasern zeichnen sich durch einen besonders großen Abschiedsgrad für Fett aus und besitzen gleichzeitig eine große Durchlässigkeit für Luft, Dampf und Wasserstoff. Zusätzlich weisen diese Filter auch solche Eigenschaften wie die Temperaturbeständigkeit bis auf 560 °C und bis zu der Temperatur eine Nichtbrennbarkeit auf.

### Ausführungsbeispiel 2

Es wurde die katalytische Wirkung und damit verbundene Temperaturerhöhung eines Katalysators in einer fetthaltigen Atmosphäre untersucht. Die Untersuchung der Katalysationsfähigkeit wurde in einer Reaktionskammer vorgenommen, in die ein anpaßbares Gasgemisch eingeleitet wurde, das den realistischen Verhältnissen bei Kernschmelzunfällen entspricht. In der Reaktionskammer befand sich der in dem Ausführungsbeispiel dargestellt Katalysator am oberen Flansch befestigt, der in den kugelförmigen Reaktionsraum ragt. Um bezüglich des Fetteinflusses konservativ zu sein, wurden die Versuche überwiegend mit solchen Fetten durchgeführt, die mit niedrigem Erstarrungspunkt gekennzeichnet sind. Damit wurde eine gute Verteilung in dem Dampfgemisch gewährleistet.

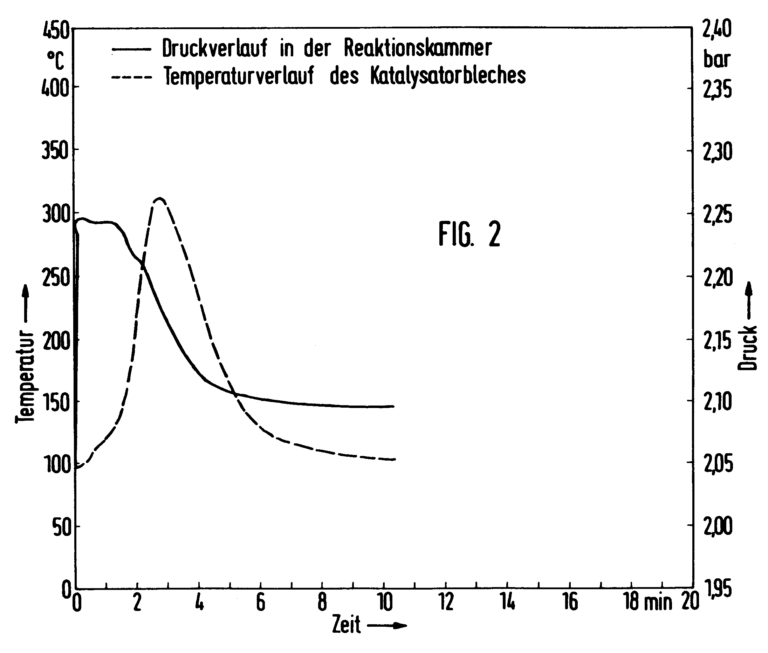

Figur 2 stellt den Temperatur- und Druckverlauf als Folge der katalytischen Oxidation des H₂ nach einer Aussetzung des Katalysatorblechs in einer fetthaltigen Sattdampfatmosphäre mit 0,5 g ESSO ESTAN 2 für 2 h bei 100°C. Die Ergebnisse des o.g. Versuchs deuten darauf hin, daß die Katalysationsverläufe in einer fetthaltigen Sattdampfatmosphäre auch nach längerer Aussetzung einwandfrei ablaufen können, wenn durch eine Blockierung die Fettabsetzung an der Oberfläche der Katalysatoren durch den HEPA-Filter vermieden werden kann.

Zahlreiche Versuche wurden ohne eine Umhüllung des Filters mit den im Dampf gemischten Fetten wie ESSO ESTAN 2 und Shell Mehrzweckfett durchgeführt. Dabei konnte keine katalytische Wirkung verbunden mit der Temperaturerhöhung auch nach wiederholter Zufuhr des Wasserstoffs festgestellt werden. Demgegenüber zeigten nach der Reinigung der Reaktionskammer und der Bleche mit Aceton, Benzin und Propan die gleichen Bleche eine sofortige und gute Katalysationsfähigkeit.

### Ausführungsbeispiel 3

Die Anwesenheit des Fetts in der Umgebung beeinflußt die Katalysationsfähigkeit nur so lange, bis das mitgerissene Fett in der Dampfatmosphäre verteilt ist und sich auf dem Blech absetzen kann. Ist die Temperatur des Katalysators hoch genug, daß eine Verdampfung des abzusetzenden Fetts nach der Berührung des Katalysators ohne weiteres stattfinden kann, so läuft dann die katalytische Reaktion ungehindert.

Um die Übergangstemperatur bestimmen zu können, wurde ein Versuch mit 5 cm³ Sumpfwasser und 0,5 g Fett des Typs ESSO ESTAN 2 durchgeführt. Dabei wurde die Reaktionskammer mit der eingeschlossenen Luft kontinuierlich aufgeheizt. Nach der Verdampfung des Wassers oberhalb von 100°C wurde zuerst eine Zeit für die Aussetzung des Katalysatorblechs für 1,5 h in der fetthaltigen Sattdampfatmosphäre zugelassen. Vor Beginn der Aussetzung wurde 0,2 bar Wasserstoff eingeleitet.

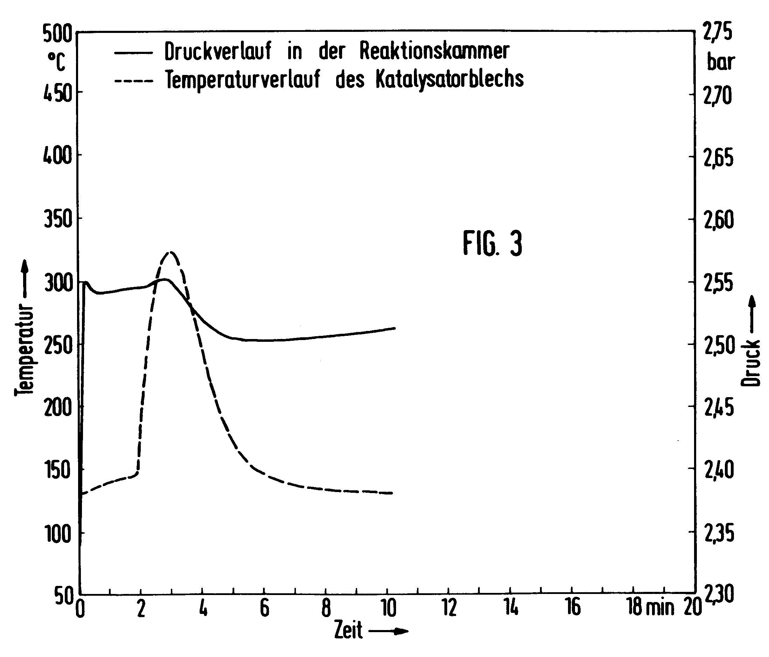

Figur 3 stellt den Temperatur- und Druckverlauf der katalytischen Reaktion dar. Erst beim Erreichen einer Temperatur von 130°C wurde eine langsame Temperaturerhöhung an der Oberfläche des Katalysatorblechs registriert. Als die Temperatur 145°C war, fing die spontane katalytische Reaktion an. Aus dem Reaktionsverlauf geht hervor, daß die Übergangstemperatur für den Beginn der katalytischen Reaktion nach einer Aussetzung in fetthaltiger Sattdampfatmosphäre mit dem Fett ESSO ESTAN 2 um 145°C liegt.

### Ausführungsbeispiel 4

Zur Bestätigung der These, daß oberhalb der Übergangstemperatur, wo das Fett im Dampfzustand vorliegt und sich auf dem Katalysationsblech nicht absetzen kann, die katalytische Reaktion unbehindert stattfindet, wurde ein Versuch bei 160 °C durchgeführt. Dabei wurden 0,3 g jeweils von dem ESSO ESTAN 2 und Shell Mehrzweckfett bei 4 cm³ Sumpfwasser aufgeheizt. Erst nach einer Aussetzung des Blechs in einer fetthaltigen Sattdampfatmosphäre bei 160°C und für 1,5 h wurden 0,22 bar Wasserstoff in die Kammer eingeleitet. Dabei herrschte in der Kammer eine atmosphärische Bedingung von 1,3 bar Luft, 1,45 bar Dampf und 0,22 bar Wasserstoff.

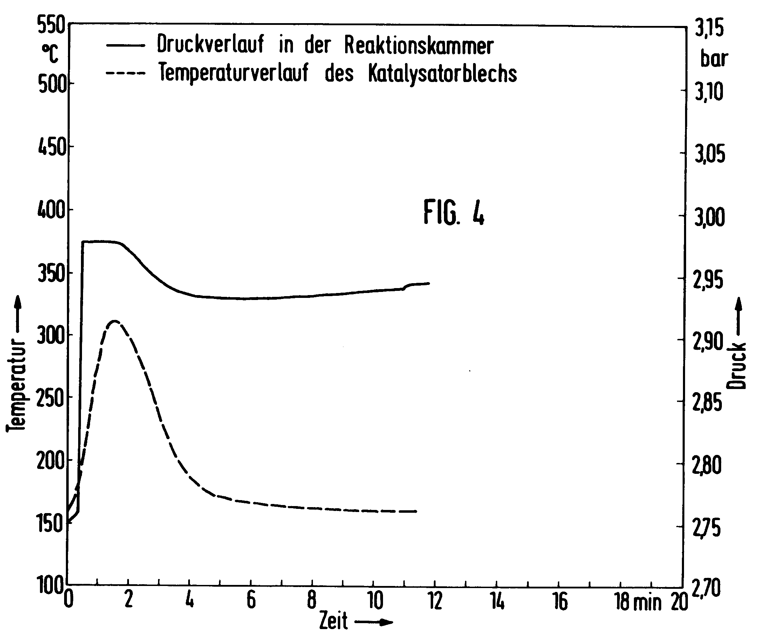

Figur 4 stellt den Temperatur- und Druckverlauf nach der Einleitung des Wasserstoffs in Folge der katalytischen Oxidation dar. Aus dem Bild geht hervor, daß die Reaktion ohne irgendeine Verzögerung anfing und innerhalb von 4 min abschloß.

Unter den gleichen Bedingungen wurden einige Versuche mit unterschiedlichem Fettgehalt sowie mit den oben genannten typischen Fettarten durchgeführt. Aus den Druck- und Temperaturverläufen ging eindeutig hervor, daß oberhalb einer Temperatur von 160 °C die Fette in Dampfform vorliegen und die katalytische Reaktion unbehindert zulassen. Zusätzlich deuten die Verläufe darauf hin, daß bei zu erwartender fetthaltiger Sattdampfatmosphäre die Katalysationsbleche vor der Fettabsetzung bis zum Beginn einer beschleunigten Katalysationsreaktion geschützt werden müssen.

## Patentansprüche

1. Vorrichtung zur Vermeidung einer Absetzung von mit Dampf mitgerissenem flüssigen Fett von hoher Viskosität bei einer Verbrennung von Wasserstoff mittels katalytischer Zünder aus einem Wasserstoff, Sauerstoff und Dampf enthaltenden Gasgemisch, wobei eine Schutzvorrichtung, die den katalytischen Zünder umhüllt, diesen bis zur Initiierung der Zündung einschließt und dessen Oberfläche gegen Kontamination und Absetzen von Fetteilchen schützt,
**dadurch gekennzeichnet,**
daß die Schutzvorrichtung aus gasdurchlässigem, für Fetteilchen im wesentlichen undurchlässigen und bei Verbrennung in leichte Asche umwandelbaren dünnen Filtermaterial besteht.

2. Vorrichtung nach Anspruch 1,
**dadurch gekennzeichnet,**
daß nach erstmaligem Auftreten einer Zündung und zwischen den nachfolgenden Zündungen der katalytische Zünder eine Temperatur von zumindest 130°C aufweist.

## Claims

1. A device for preventing the deposition of liquid grease of high viscosity, which is entrained by steam, during the combustion of hydrogen from a gas mixture containing hydrogen, oxygen and steam by means of a catalytic igniter, wherein a protective device which covers the catalytic igniter encloses the latter until the initiation of the ignition and protects its surface from contamination by and deposition of grease particles, characterised in that the protective device consists of gas-permeable thin filter material, which is substantially impermeable to grease particles and which can be converted into light ash on combustion.

2. A device according to claim 1, characterised in that after the first occurrence of an ignition and between subsequent ignitions the catalytic igniter has a temperature or at least 130°C.

## Revendications

1. Dispositif pour empêcher un dépôt de grasse liquide de viscosité grande, entraînée par une vapeur, lors d'une combustion d'hydrogène au moyen d'un allumeur catalytique, à partir d'un mélange gazeux contenant de l'hydrogène, de l'oxygène et de la vapeur, un dispositif de protection, qui enveloppe l'allumeur catalytique, enveloppant ce dernier jusqu'au déclenchement de l'allumage et protègeant sa surface vis-à-vis d'une contamination et d'un dépôt de particules de graisse, caractérisé par le fait que le dispositif de protection est en un matériau filtrant mince, perméable au gaz, sensiblement imperméable aux particules de graisse et pouvant être transformé en cendres légères, lors de la combustion.

2. Dispositif suivant la revendication 1, caractérisé par le fait qu'après la première apparition d'un allumage et entre les allumages suivants, l'allumeur catalytique possède une température égale à au moins 130°C.
